(19) Europäisches Patentamt
European Patent Office
Office européen des brevets

(11) EP 4 506 687 A1

(12) **EUROPEAN PATENT APPLICATION**

(43) Date of publication:
**12.02.2025 Bulletin 2025/07**

(21) Application number: **23190990.4**

(22) Date of filing: **11.08.2023**

(51) International Patent Classification (IPC):
***G01N 30/88** (2006.01)* ***G01N 30/94** (2006.01)*

(52) Cooperative Patent Classification (CPC):
**G01N 30/88; G01N 30/94;** G01N 2030/8813

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventors:
- **Morlock, Gertrud**
  **35392 Giessen (DE)**
- **Meyer, Daniel**
  **35392 Giessen (DE)**
- **Rein, Dietrich**
  **67056 Ludwigshafen am Rhein (DE)**
- **Lamotte, Stefan**
  **67056 Ludwigshafen am Rhein (DE)**
- **Meyer, Kathrin**
  **67056 Ludwigshafen am Rhein (DE)**
- **Pulbere, Sorin**
  **67056 Ludwigshafen am Rhein (DE)**
- **Kern, Stefan**
  **67056 Ludwigshafen am Rhein (DE)**

(74) Representative: **Eisenführ Speiser**
**Patentanwälte Rechtsanwälte PartGmbB**
**Postfach 31 02 60**
**80102 München (DE)**

# (54) METHOD FOR DETECTING THE AMOUNT OF RETINYL IN A RETINYL CONTAINING COMPOSITION, CORRESPONDING USES, CORRESPONDING TEST-KITS AND CORRESPONDING USES OF TEST-KITS

(57) The invention relates to a method for detecting the amount of retinyl in a retinyl containing composition, the method comprising specific steps. The invention also relates to the use of a corresponding method. The invention further relates to a corresponding test-kit for quantifying retinyl containing substances. The invention also relates to the use of a corresponding test-kit to quantify retinyl containing substances.

EP 4 506 687 A1

## Description

The invention relates to a method for detecting the amount of retinyl in a retinyl containing composition, the method comprising specific steps. The invention also relates to the use of a corresponding method. The invention further relates to a corresponding test-kit for quantifying retinyl containing substances. The invention also relates to the use of a corresponding test-kit to quantify retinyl containing substances.

Vitamin A deficiency continues to be a major global health issue and numerous measures to increase vitamin A intake via staple foods are currently taken. A number of quantitative techniques are available to determine vitamin A concentration in fortified staple products such as edible oils, sugar, and flour.

The scientific article "Quantification of Vitamin A in Palm Oil Using a Fast and Simple Portable Device: Method Validation and Comparison to High-Performance Liquid Chromatography", by F. Rohner et al., Int. J. Vitam. Nutr. Res., 81, 5, 2011, 335-342, discloses a device that quantitatively measures the content of retinyl palmitate in refined palm oil.

Scientific article "Quantification of Vitamin A in Fortified Rapeseed, Groundnut and Soya Oils Using a Simple Portable Device: Comparison to High Performance Liquid Chromatography" by C. Renaud et al., Int. J. Vitam. Nutr. Res., 83, 2, 2013, 122-128, discloses vitamin A determination in rapeseed, groundnut, and soya oil using a portable device and comparing data from said device to data from high-performance liquid chromatography.

Scientific paper "A review of photometric methods for the quantitation of vitamin A" by A. Kumar et al., Microchem. J. 171. 2021, 106791, discloses spectrophotometric methods for quantification of vitamin A.

Scientific article "Portable Devices for Measurement of Vitamin A Concentrations in Edible Oil: Field Readiness of Available Options" by S. L. Huey et al., ACS Omega 2022, 7, 17502-17518, discloses portable devices for measuring of vitamin A.

Scientific article "Thin Layer Chromatography for the Analysis of Vitamins and Their Derivatives" by C. Cimpoiu et al., Journal of Liquid Chromatography & related Technologies, 30:5-7, 2007, 701-728, discloses the use of thin layer chromatography for the analysis of vitamins, including vitamin A.

Scientific article "Rapid direct analysis of retinyl palmitate (vitamin A) in fortified vegetable oils by HPLC-FLD" by G. G. Rimkus et al., Foot Additives & Contaminants: Part A, 39:1, 24-34, 2022, discloses a high-performance liquid chromatography based method for detection of retinyl palmitate in retinyl palmitate fortified vegetable oils.

Scientific article "An open-source smartphone app for the quantitative evaluation of thin-layer chromatographic analyses in medicine quality screening" by C. Hauk, Scientific Reports, 12, 2022, 13433, discloses a smartphone-based imaging software for the quantification of thin-layer chromatographic analyses.

From the state of the art, "iCheck™ Fluoro" is known, a portable fluorometer by the company "BioAnalyt GmbH", Teltow, Germany, for determining vitamin A in food and biological fluids; https://web.archive.org/web/20220930185157/https://www.bioanalyt.com/product/icheck-fluoro/.

There is a continuing need for methods for detecting the amount of retinyl moieties in a retinyl containing composition which are easy to use. Specifically, there is a need for respective methods that are suitable for on-site testing in warehouses and supermarkets and the like, with no need for a laboratory. There is also a need for respective methods that require little or no training to carry out the method. It is often desired to use on-site testing methods without the need for specialized personnel or transport to laboratories. There is further a need for methods for detecting the amount of retinyl in retinyl containing compositions, without the requirement to chemically modify the sample. Chemical modification of samples often requires a special training and/or leads to special requirements regarding the environment and/or introduces more variance in the analytical procedure; such methods frequently require the use of a laboratory and cannot be carried out in a mill for edible oils, a warehouse or a supermarket. There is further a need for respective methods, where no poisonous substances are used; the use of poisonous substances is frequently unwanted in warehouses and/or supermarkets. There is further a need for respective methods, where the amount of substances that are considered in environmental hazard is reduced to a minimum.

There is also specifically a demand for methods for detecting the amount of retinyl in retinyl containing compositions, without the use of the Carr-Price reaction. The use of antimony trichloride and chloroform is in many cases not well accepted by customers in the field of retinyl detection in retinyl containing compositions, and corresponding methods frequently fail to perform in an acceptable manner, specifically in the presence of certain edible oils; this is considered a disadvantage.

Specifically, there is a need for methods for detecting the amount of retinyl in retinyl containing compositions that can be used to determine the amount of retinyl in unrefined palm oil and/or soybean oil and/or mixtures thereof.

Further, there is a need for methods for detecting the amount of retinyl in retinyl containing compositions that use a sample volume that is as small as possible. There is further a need for methods that use a sample volume that is as small as possible and at the same time minimize the technical equipment needed for carrying out the method. There is further a need for respective methods that use a sample volume as small as possible and do not require the use of needles. The use of needles is frequently unwanted, due to the risk of injuries associated with the use of needles and/or their deposition. Customers in the field of methods for detecting the amount of retinyl in retinyl containing compositions frequently prefer

methods that use sample volumes that are as small as possible and do not comprise the use of needles.

There is also a need for methods for detecting the amount of retinyl in retinyl moiety containing vegetable oils at retinyl concentrations starting from a concentration of 1 mg Retinol Activity Equivalents or Retinol Equivalents /kg oil. The activity of VAP can be expressed in international units. One gram of pure vitamin A palmitate is equivalent to 1818000 IU vitamin A is equal to 545000 μg RAE (Retinol activity equivalents) or RE (Retinol equivalents) per gram (Pharmacopeia European 10th Edition).

There is the need for methods for detecting the amount of retinyl in retinyl containing compositions that do not suffer from matrix induced sensitivity issues. In many cases, the retinyl containing compositions contain other substances, in addition to retinyl containing substances that interfere with the detection of retinyl containing substances. This effect is highly undesired and methods minimizing this effect, preferably methods avoiding this effect, are highly preferred. There is a need for methods for detecting the amount of retinyl in retinyl containing compositions that reliably detect the amount of retinyl, largely independent, preferably completely independent, of the other substances contained in the retinyl containing compositions.

There is a need for methods for detecting the amount of retinyl in retinyl containing substances that can be carried out quickly, i.e. in less than 20 minutes, preferably in less than 15 minutes. There is a specific need for methods that can be carried out in oil mills, warehouses and/or supermarkets in less than 15 minutes with a sample volume as small as possible.

There is also the need for test-kits for carrying out respective methods in an advantageous and efficient manner.

The present invention is defined in the claims and described in detail hereinafter.

The present invention relates, in its categories, to a method for detecting the amount of retinyl in a retinyl containing composition, to the use of a method to quantify the retinyl content in retinyl containing substances in a retinyl containing composition, to a test-kit for quantifying retinyl containing substances and to the use of a test-kit to quantify retinyl containing substances. Embodiments, aspects or properties that are described in connection with one of these categories or described as preferred are each correspondingly or analogously applicable to the respective other categories, and vice versa.

Unless stated otherwise, preferred aspects or embodiments of the invention and their various categories can be combined with other aspects or embodiments of the invention and their various categories, especially with other preferred aspects or embodiments. The combination of respectively preferred aspects or embodiments with one another again results in preferred aspects or embodiments of the invention.

In a primary aspect of the present invention, the above-specified objectives are achieved and the above-specified problems are solved in whole or in part by a method for detecting the amount of retinyl in a retinyl containing composition, the method comprising the following steps:

(S-1) applying a defined volume of a liquid test sample of a retinyl containing composition to a reversed-phase chromatography plate, preferably a reversed phase thin layer chromatography plate, more preferably a reversed-phase high-performance thin-layer chromatography plate;

(S-2) after applying the defined volume of the liquid test sample: separating the retinyl containing substances contained in the defined volume of the liquid test sample of the retinyl containing composition from other substances in the liquid test sample using the reversed-phase chromatography plate, preferably the reversed phase thin layer chromatography plate, more preferably the reversed-phase high-performance thin-layer chromatography plate, and a mobile phase;

(S-3) after separating the retinyl containing substances from other substances: removing the mobile phase by means of evaporation, so that at least the retinyl containing substances are in contact with the reversed-phase chromatography plate, preferably the reversed phase thin layer chromatography plate, more preferably the reversed-phase high-performance thin-layer chromatography plate;

(S-4) after removing the mobile phase by means of evaporation: excitation of fluorescence in the retinyl containing substances on the reversed-phase chromatography plate, preferably the reversed phase thin layer chromatography plate, more preferably the reversed-phase high-performance thin-layer chromatography plate, using electromagnetic radiation and detection of electromagnetic radiation resulting from the fluorescence of the retinyl containing substances;

(S-5) after detection of the electromagnetic radiation resulting from the fluorescence of the retinyl containing substances: Evaluation of the electromagnetic radiation resulting from the fluorescence of the retinyl containing substances to quantify the amount of retinyl present in the test sample.

A liquid test-sample is suitable to be reliably used with 1 μL and 2 μL commercially available medical glass

capillaries with the usual precision required in the field of the current invention. Frequently, edible oils need to be diluted (with e.g. n-heptane) to be suitable liquid test samples.

The term "retinyl" denotes for the chemical structural element $C_{19}H_{27}$ as defined by Formula 1.

Formula 1: 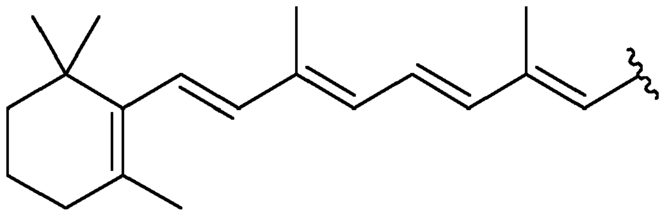

Within the scope of the present invention, the structural element "retinyl" is also termed "retinyl moiety".

The method of the present invention relates preferably to detecting the amount of retinyl moieties in at least one of the provitamin A carotenoids α-carotene, β-carotene and β-cryptoxanthin and/or in at least one of the molecules given in different isomeric forms by Formula 2 (all trans), Formula 3 (11,13-dicis), Formula 4 (13-cis), Formula 5 (9,13-dicis), Formula 6 (11-cis) and Formula 7 (9-cis), preferably given by the all trans conformation in Formula 2.

Formula 2: 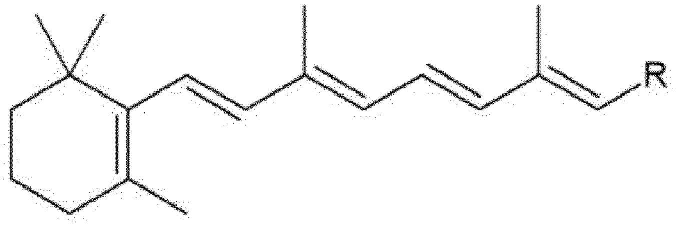

Formula 3: 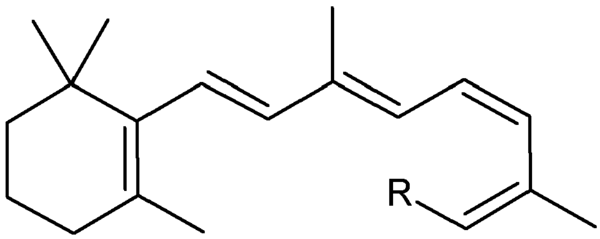

Formula 4: 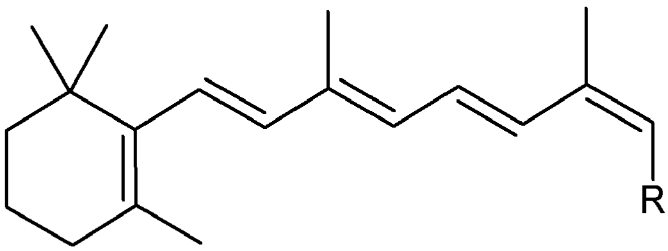

Formula 5: 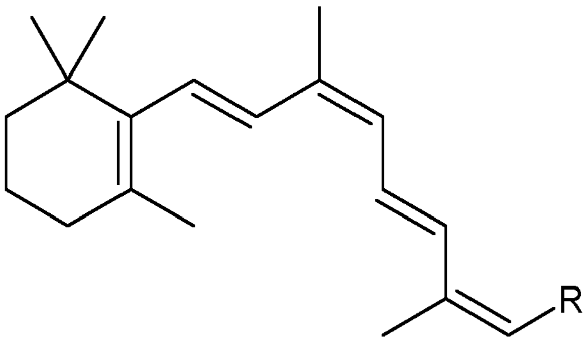

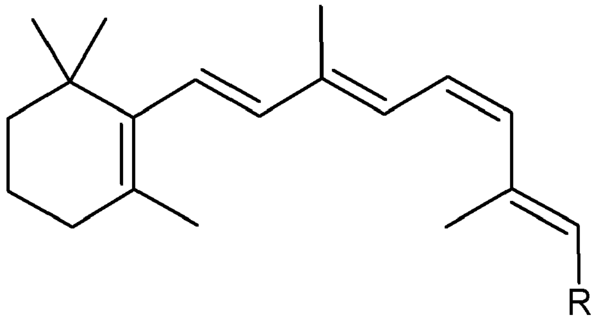

Formula 6:

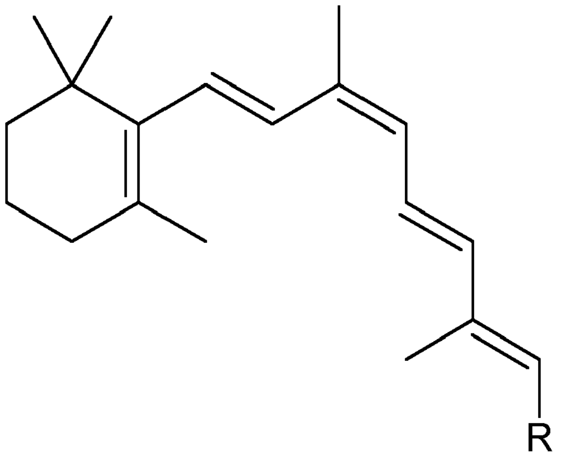

Formula 7:

with R being selected from the group of moieties consisting of $CH_2$-OH, CHO, $CH_2$-$OR^2$, COOH, $COOR^3$;
with $R^2$ being (C=O)-alkyl;
with $R^3$ being alkyl;
with alkyl being selected from the group consisting of methyl, ethyl, propyl, isopropyl, butyl, 2-butyl, sec-butyl, isobutyl, tert.-butyl, palmityl, stearyl.

In many cases it is possible to distinguish structurally and/or chemically different molecules of Formulae 2 to 7 from their position on the reversed-phase chromatography plate, preferably on the reversed-phase high-performance thin-layer chromatography plate. For example, in some cases, the retinyl moieties of vitamin A palmitate molecules can be distinguished from the retinyl moieties of vitamin A acetate molecules as their fluorescence in step (S4) occurs in different positions from one another on the reversed-phase chromatography plate, preferably on the reversed-phase high-performance thin-layer chromatography plate. As another example, in some cases, the retinyl moieties of vitamin A palmitate molecules can be distinguished from the retinyl moieties of vitamin A propionate molecules as their fluorescence in step (S4) occurs in different positions from one another on the reversed-phase chromatography plate, preferably on the reversed-phase high-performance thin-layer chromatography plate. However, the most important feature of the inventive method, the inventive test-kit and their respective uses is, that retinyl containing substances get separated from other compounds not containing retinyl and give a signal, preferably an enhanced signal, that makes it possible to quantify retinyl out of a huge mixture of different compounds.

The term "retinyl containing composition" relates to chemical compositions encompassing molecules that contain retinyl moieties, especially and preferably to chemical compositions encompassing edible oils and encompassing molecules that contain retinyl moieties. The retinyl containing composition comprises substances containing retinyl moieties and may, additionally, comprise substances not containing retinyl moieties. Substances containing retinyl moieties in particular include retinol, vitamin A palmitate, vitamin A acetate and vitamin A propionate. The "amount of retinyl" relates to the amount of retinyl moieties.

The term "reversed-phase" in the context of chromatography refers, in accordance with the usual understanding of the skilled person, to chromatographic conditions in which a nonpolar stationary phase is used.

The term "reversed-phase chromatography plate" encompasses reversed-phase thin-layer chromatography plates and reversed-phase high-performance thin-layer chromatography plates. The main difference between reversed-phase high-performance thin-layer chromatography plates and reversed-phase thin-layer chromatography plates are: high-performance thin-layer chromatography plates are based on optimized silica gel 60 with a smaller particle size than

used for reversed-phase thin-layer chromatography plates. This smaller particle size allows a higher packing density and a smoother surface. Thus, compared to reversed-phase thin-layer chromatography plates, reversed-phase high-performance thin-layer chromatography plates exhibit a reduced sample diffusion, resulting in more compact bands or spots. Also, compared to reversed-phase thin-layer chromatography plates, the smaller particle size of reversed-phase high-performance thin-layer chromatography plates significantly increases detection sensitivity and analysis speed. The skilled person knows suitable commercially available reversed-phase thin-layer chromatography plates and reversed-phase high-performance thin-layer chromatography plates.

Within the context of the present invention, unless specifically described otherwise, the reversed-phase chromatography plate is preferably a reversed-phase high-performance thin-layer chromatography plate.

The skilled person in the field of the present invention removes the mobile phase by means of evaporation, viz. supported by hot or cold air or b) by incubating at ambient pressure and ambient temperature until no remaining liquid is visible on the chromatography plate.

The skilled person knows that evaporation is finished, when the plate looks homogeneous to the unaided eye, except for the sample track and the elution front. This marks the point where no remaining liquid is visible on the chromatography plate.

That the retinyl containing substances are in contact with the reversed-phase chromatography plate means that the retinyl containing substances are either adsorbed on the surface of the reversed-phase chromatography plate or otherwise interacting with the surface of the reversed-phase chromatography plate, without unacceptable interference by solvent molecules.

Methods of excitation, detection and evaluation of electromagnetic radiation resulting from fluorescence of fluorescing substances to quantify the amounts of said substances in a sample are as such part of the general knowledge of the skilled person. The skilled person applies suitable techniques as needed with regard to the circumstances of the individual case in light of the teachings of this text.

In many cases, it is preferred that the retinyl containing composition is selected from the group consisting of a food product premix, liquid milk, milk powder, flour, sugar, bouillon powder, animal oils and plant oils, most preferably the retinyl containing composition is an edible oil.

In cases where the retinyl containing composition is not a liquid, defined amounts of said non-liquid retinyl containing compositions are dissolved in water and/or ethanol and/or acetone and/or n-heptane and/or cyclohexane; the defined volume of the liquid test sample is then taken from this solution. When a liquid test sample of a retinyl containing composition does not contain vegetable oil, it is in many cases preferred to add retinyl-free vegetable oil to such test samples, prior to applying a defined volume of the liquid test sample to a reversed-phase chromatography plate, in order to increase the sensitivity of the retinyl detection.

The method according to the present invention is easy to use. It does not require chemical modifications of substances prior to analysis. In addition, the method according to the present invention is extremely sensitive and can be used with extremely small sample volumes, in many cases as low as 1 $\mu$L. In addition, the method according to the present invention is fast and shows good repeatability.

The present invention, with its various aspects, especially and preferably relates to a method (as described above, preferably as identified above as preferred), wherein

- the mobile phase is selected from the group consisting of:

    - diethyl ether
    - cyclohexane
    - toluene
    - chloroform
    - acetonitrile
    - methanol
    - dichloromethane,
    - acetic acid,
    - ethanol
    - acetone
      and
    - water;

  preferably from the group consisting of

    - acetone
      and

- water;

with preference, the mobile phase consists of acetone and water in a ratio of 99:1 to 1:99, with more preference in a ratio of 98:2 to 90:10, with even more preference in a ratio of 97:3 to 93:7, with most preference in a ratio of 95:5.

From this group of solvents, the skilled person selects a suitable mobile phase based on his knowledge and in accordance with the demands of the individual case. Where needed, the skilled person conducts simple experiments in this regard without undue burden.

In many cases, it is most preferred when a mixture of acetone and water in the above-defined ratios is used as mobile phase; specifically, when suitable reversed-phase high-performance thin-layer chromatography plates are used in combination with such a mobile phase, the amount of retinyl in soybean oil and unrefined palm oil can be determined whilst other advantages of the method according to the present invention are additionally present.

When other substances and/or other mixtures are used as mobile phase, in many cases, the degree of separation achieved is not sufficient. Other solvents also suitable for an acceptable separation, are harmful for humans and/or the environment and are therefore regarded as problematic in the field of the current invention.

The present invention, with its various aspects, especially and preferably relates to a method (as described above, preferably as identified above as preferred), wherein

- the step of separating the retinyl containing substances from other substances in the retinyl containing composition using the reversed-phase chromatography plate, in particular the reversed-phase thin-layer chromatography plate or the reversed-phase high-performance thin-layer chromatography plate, preferably the reversed-phase high-performance thin-layer chromatography plate, and a mobile phase (S-2) is carried out in a container sufficiently preventing the evaporation of solvent during the time span needed for separation;
  and/or, preferably "and",

- the step of removing the mobile phase by means of evaporation (S-3) is carried out for a time period ranging from 30 seconds to 5 minutes, preferably ranging from 45 seconds to 3 minutes, more preferably ranging from 1 minute to 2 minutes;
  and/or, preferably "and",

- wherein the step of removing the mobile phase by means of evaporation is carried out supported by means of

  - hot air
    and/or, preferably "or"
  - cold air
    and/or, preferably "or"
  - by incubating at ambient pressure and ambient temperature, until no remaining liquid is visible on the chromatography plate, preferably by means of incubating at ambient pressure and ambient temperature until no remaining liquid is visible on the chromatography plate;
    and/or, preferably "and",

- the mobile phase has a vapour pressure at 20°C ranging from 1.5 kPa to 50 kPa.

In many cases, depending on the physicochemical properties of the mobile phase used, it is preferable to realize the step of separating the retinyl containing substances from other substances using the reversed-phase chromatography plate and a mobile phase (S-2) in a container, which sufficiently prevents the evaporation of solvent during the time span needed for separation. Suitable containers are known to the skilled person and are selected by the skilled person without undue burden. In many cases, the use of a suitable container leads to especially favourable combinations of advantages when carrying out the method according to the invention. Favourable combinations of good separation and favourably quick execution of the method according to the present invention is in many cases achieved.

When the step of removing the mobile phase by means of evaporation (S-3) is carried out for a time period as defined above, in many cases the quality of the results is preferably not affected in a disadvantageous manner. The start of the respective time periods for removing the mobile phase by means of evaporation (S-3) is the removal of the reversed-phase chromatography plate from the container and the end of the respective time periods is the moment when the plate looks homogeneous, except for the sample tracks and the solvent front.

The step of removing the mobile phase by means of evaporation being supported by means of hot or cold air has the meaning that air or other suitable gas, preferably air or other suitable gas with a temperature in the range of 20 °C to 80 °C, is blown onto the reversed-phase chromatography plate during the evaporation step. This can be achieved by use of

compressed air, use of a hairdryer or other suitable means known to the skilled person. In many cases it is preferred that evaporation is supported by means of hot or cold air for 30 seconds to 60 seconds.

Mobile phases with vapor pressures in the above-defined range are particularly suitable for carrying out the method of the invention when the above time periods for removing the mobile phase by means of evaporation (S-3) are desired.

The present invention, with its various aspects, especially and preferably relates to a method (as described above, preferably as identified above as preferred), wherein

- the reversed-phase chromatography plate is selected from the group consisting of:

  - reversed phase high performance thin layer chromatography plates
    and

  - reversed phase thin layer chromatography plates;
    preferably the reversed-phase chromatography plate is a reversed-phase high-performance thin-layer chromatography plate selected from the group consisting of:

    - RP-2,

    - RP-8
      and

    - RP-18;
      and/or, preferably "and",

  - the test sample of the retinyl containing composition, applied to a reversed-phase high-performance thin-layer chromatography plate has a volume of 0.5 microliters to 10 microliters, preferably of 0.8 microliters to 5 microliters, most preferably of 1.0 microliter.

Reversed-phase high-performance thin-layer chromatography plates of the above-defined types are known to the skilled person and are commercially available.

In principle all reversed-phase chromatography plates, in particular all reversed-phase thin-layer chromatography plates or reversed-phase high-performance thin-layer chromatography plates, are suitable for carrying out the method according to the present invention. Acidic and basic phase plates are unsuitable for the purposes of the present invention. With this knowledge, the skilled person identifies further suitable chromatography plates without undue burden. In many cases, most preferably a reversed-phase high-performance thin-layer chromatography plate of the type RP-18 is used.

The use of the above-defined reversed-phase high-performance thin-layer chromatography plates leads to an especially favourable combination of the above-described advantages of the method according to the present invention. Specifically, the combination of a reversed-phase high-performance thin-layer chromatography plate with a test sample volume of 1 μL in many cases leads to an advantageous combination of low sample volume, good separation of the analyte (retinyl containing substances) from interfering substances and detectability of retinyl containing substances down to concentrations of 25000 IU/kg oil. Particularly good results are obtained, when in addition the mobile phase as previously disclosed is used.

The present invention, with its various aspects, especially and preferably relates to a method (as described above, preferably as identified above as preferred), wherein

- separating the retinyl containing substances from other substances in the retinyl containing composition using the reversed-phase chromatography plate, preferably the reversed-phase high-performance thin-layer chromatography plate, and a mobile phase takes from 2 minutes to 60 minutes, preferably from 3 minutes to 30 minutes, more preferably from 5 minutes to 15 minutes, most preferably from 7 minutes to 14 minutes.

In many cases, the above-defined time ranges for separating the retinyl containing substances from other substances in the retinyl containing composition using the reversed-phase chromatography plate when carrying out the method according to the present invention lead to a particularly favourable combination of obtaining good separation and thus high quality results in a fast and hence effective way.

The present invention, with its various aspects, especially and preferably relates to a method (as described above, preferably as identified above as preferred), wherein

- the retinyl containing composition is an edible oil, preferably an edible plant oil, more preferably an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower;
  and/or, preferably "and",

- the retinyl containing substances whose fluorescence is excited, and whose electromagnetic radiation resulting from the fluorescence is detected (S-4), are selected from the group consisting of:

  - retinol
    and

  - retinol derivative,

    preferably the retinyl containing substances are retinol derivatives;

    with preference the retinyl containing substances are retinol derivatives, selected from the group consisting of:

    - vitamin A palmitate

    - vitamin A acetate

    - vitamin A propionate
      and

    - mixtures thereof.

The term "retinol derivative" denotes all chemical derivatives of the molecule retinol, e.g. esters of retinol, halides of retinol, ethers of retinol, carbamates of retinol and others.

Favourable combinations of an excellent separation of retinyl containing substances and substances that adversely affect their detection by means of fluorescence as well as an excellent fluorescence enhancement result in many cases, when the method according to the invention is carried out with the above-defined retinyl containing compositions and the above-defined retinyl containing substances.

The present invention, with its various aspects, especially and preferably relates to a method (as described above, preferably as identified above as preferred), wherein

- the retinyl containing composition is an edible oil, preferably an edible plant oil, more preferably an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower;
  and/or, preferably "and",

- the retinyl containing substance whose fluorescence is excited, and whose electromagnetic radiation resulting from the fluorescence is detected (S-4), is selected from the group consisting of:

  - retinol
    and

  - retinol derivative,

    preferably the retinyl containing substance is a retinol derivative;

    with preference the retinyl containing substance is a retinol derivative, selected from the group consisting of:

- vitamin A palmitate
- vitamin A acetate
  and
- vitamin A propionate.

In many cases it is preferred that the retinyl containing substance is vitamin A propionate, more preferred it is vitamin A acetate and most preferred it is vitamin A palmitate.

In many other cases, it is preferred that the retinyl containing substances are a mixture of vitamin A palmitate and vitamin A acetate. These substances are frequently used to supplement the above-defined plant oils as well as animal feedstock.

With the method according to the present invention, the amount of retinyl present as amount of retinyl in retinyl containing substances vitamin A palmitate and/or vitamin A acetate and/or vitamin A propionate can be determined in the above defined plant oils with good reproducibility.

Frequently, plant oils contain substances that interfere with the mode of detection whilst detecting the amount of retinyl in a retinyl containing composition; such disadvantageous interference is almost entirely, preferably entirely, avoided by the method according to the present invention. The present invention, with its various aspects, especially and preferably relates to a method (as described above, preferably as identified above as preferred), wherein

- the retinyl containing composition is an edible oil and at least a portion of the edible oil is diluted with a suitable solvent, preferably n-heptane or cyclohexane, more preferably n-heptane, prior to taking a liquid test sample from the diluted edible oil and applying said liquid test sample as a liquid test sample of a retinyl containing composition to a reversed-phase high-performance thin-layer chromatography plate.

In many cases with this combination of features, especially positive effects and combinations of effects result, when carrying out the method according to the present invention. A skilled person selects suitable mixing ratios based on the requirement of the individual case and based on simple experiments without undue burden. Typically, desired concentrations of retinyl containing substances in edible oil can be detected in a particularly favorable way if the sample is diluted with the above solvents.

The present invention, with its various aspects, especially and preferably relates to a method (as described above, preferably as identified above as preferred), wherein

- the excitation of fluorescence in the retinyl containing substances on the reversed-phase chromatography plate, preferably the reversed-phase high-performance thin-layer chromatography plate, using electromagnetic radiation (S-4) is achieved by using an excitation wavelength in the range from 250 nm to 400 nm, preferably in the range from 270 nm to 400 nm, most preferably in the range from 320 nm to 370 nm;
  and/or, preferably "and",
- the detection of the electromagnetic radiation resulting from the fluorescence of the retinyl containing substances is achieved in the range from 410 nm to 600 nm, preferably in the range from 450 nm to 530 nm more preferably in the range from 460 nm to 510 nm, most preferably in the range from 475 nm to 479 nm.

The excitation of fluorescence in the above described wavelength ranges allows to carry out the method according to the present invention with favourable fluorescence results and at the same time with the use of reliable and cost-efficient excitation light sources, largely independent of environmental effects, such as heat development of the excitation light source, complex cooling requirements, heavy equipment or reduced flexibility of application. In many cases, a 366 nm or 365 nm diode is used when carrying out the method according to the invention, leading to a very favourable combination of the above effects.

For detection of the electromagnetic radiation resulting from the fluorescence, optionally a suitable optical filter is used to suitably block electromagnetic radiation of the wavelengths used for excitation of fluorescence from reaching the detector.

The present invention, with its various aspects, especially and preferably relates to a method (as described above, preferably as identified above as preferred), wherein

- the retinyl containing composition is an edible oil, preferably an edible plant oil, more preferably an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and

mixtures thereof, even more preferably an edible plant oil selected from the group consisting of oils of: Canola, Coconut, Groundnut, Mustard, Palm, Peanut, Rapeseed, Soybean, Sunflower;
and

- the retinyl containing substances are retinol derivatives, selected from the group consisting of:

  - vitamin A palmitate
  - vitamin A acetate
  - vitamin A propionate
    and
  - mixtures thereof;
    and

- the reversed-phase high-performance thin-layer chromatography plate is selected from the group consisting of

  - RP-2,
  - RP-8
    and
  - RP-18;

  and

- detection of the electromagnetic radiation resulting from the fluorescence of the retinyl containing substances in contact with the reversed-phase high-performance thin-layer chromatography plate is increased by a factor of at least 2, preferably by a factor of at least 5, more preferably by a factor of at least 10, even more preferably by a factor of at least 20, compared to the fluorescence of the same amount of these retinyl containing substances in contact with the same area of a normal phase high-performance thin-layer chromatography plate.

Carrying out the method according to the present invention with this combination of features results in an especially high sensitivity of the method. In many cases, with this combination of features, an enhancement of fluorescence is observed which allows especially low detection limits when detecting the amount of retinyl in retinyl containing compositions.

The enhancement of the fluorescence of retinyl containing substances by the combination of said chromatography plate and said oil can be determined as follows: A defined amount A1 of retinyl is dissolved in a predefined amount of at least one of n-heptane, and/or cyclohexane and/or at least one of the compounds of the mobile phase in order to obtain a reference R1. An aliquot (defined volume) of said reference R1 is subjected to the method steps (S-1) to (S-5) of claim 1. The same amount A1 of retinyl is dissolved in an edible oil, which is free of retinyl in order to obtain a reference R2. An aliquot (defined volume) of said reference R2 is subjected to the method steps (S-1) to (S-5) of claim 1. The aliquots of R1 and R2 are taken such that they contain the same amount A1 of retinyl. The enhancement E is obtained according to the following equation:

$$E = \frac{amount\ A1\ \ of\ retinyl\ in\ R2}{amount\ A1\ of\ retinyl\ in\ R1}.$$

The skilled person selects an appropriate-reversed-phase chromatography plate as described herein, an appropriate mobile phase as described herein, an appropriate oil as described herein, an appropriate means of exciting fluorescence, and an appropriate means of detecting emitted fluorescence. This enables the skilled person to observe a fluorescence enhancement for retinyl containing substances in each oil to be analysed.

Other advantages of the present invention are also achieved with this combination in an especially favourable manner.

The present invention, with its various aspects, especially and preferably relates to a method (as described above, preferably as identified above as preferred),

- wherein the evaluation of the electromagnetic radiation resulting from the fluorescence of the retinyl containing substances to quantify the amount of retinyl-groups present in the test sample comprises the use of at least two standard samples, preferably standard samples containing vitamin A palmitate, vitamin A acetate and/or vitamin A propionate, and comprises employing the standard addition method according to herein Example 6.

The present invention, with its various aspects, especially and preferably relates to a method (as described above, preferably as identified above as preferred),

- comprising the (additional) steps:
  - taking two comparative samples C1 and C2 with the same composition as the liquid test sample,
  - adding a defined amount A1 of the retinyl containing substance to comparative sample C1 and a defined amount A2 of the retinyl containing substance to comparative sample C2, the amount A2 being

  twice as much as the amount A1, so that two standard samples ST1 and ST2 result,

  - applying a defined volume of the standard sample ST1 to a second lane and the same volume of the standard sample ST2 to a third lane of the reversed-phase chromatography plate, within 120 seconds after the test sample is applied to the first lane,
    and/or
- comprising the (additional) steps:
  - placing a defined amount A1 of a retinyl containing substance into a vial V1 and a defined amount A2 of the retinyl containing substance into a vial V2, with the amount A2 being twice as much as the amount A1,
    and optionally placing a defined amount $A_m$ of the retinyl containing substance into a vial $V_n$ with the amount $A_m$ being m times as much as the amount A1 and m being an integer ranging from 3 to 1.000, preferably from 3 to 100, and n being an integer ranging from 3 to 100, preferably from 3 to 10 and further preferred from 3 to 5,
  - adding a defined amount of a retinyl containing composition, preferably a liquid retinyl containing composition, to at least one of the vials V1, V2, $V_n$, preferably to 3 to 10 vials V1, V2, $V_n$, more preferably to 3 to 5 vials V1, V2, $V_n$,
  - mixing the content of each vial $V_1$, $V_2$, $V_n$,
  - applying, within 120 seconds after a defined volume of the liquid test sample is applied to the first lane of the reversed phase chromatography plate, the same defined volume of the vial $V_1$, to a second lane of the reversed chromatography plate and the same defined volume of the vial $V_2$ to a third lane of the reversed-phase chromatography plate and optionally the same defined volume of at least one vial $V_n$ to at least one further lane thereof.

In many cases, the standard addition method is used when carrying out the method according to the present invention.

The standard addition method has the advantage that any background signal originating from e.g. oil or other matrix substances that may occur can be compensated for in the intensity determination of retinyl signals. This minimizes the potential bias arising from a possible matrix effect when determining the amount of retinyl in a retinyl containing composition.

The standard addition method involves spiking the edible oil sample of unknown retinyl content respectively supplemented with no amount and with known amounts of retinyl. Applying several distinct samples with increasing concentrations of a retinyl containing substance onto the reversed phase chromatography plate allows to extrapolate for the retinyl concentration in an unknown liquid test sample.

For the determination of retinyl (e.g. as part of vitamin A palmitate molecules) in a retinyl containing composition (e.g. a vitamin A palmitate fortified edible oil) the respective addition of standards (e.g. defined amounts of A1, A2, $A_m$) in a constant oil sample having a defined total volume was applied. Generally, to apply the standard addition method, the liquid test sample is spilt into multiple aliquots of identical chemical composition and some of them are spiked with increasing concentrations of defined amounts of a retinyl containing substance. The amounts of unknown retinyl and the total volume of all aliquots are the same; the only difference between said aliquots is the amount of the added standard of retinyl. As a result, upon measuring the fluorescence a linear relationship between the retinyl signal and the amount of retinyl added is observed, allowing for the determination of the unknown retinyl concentration by extrapolating the zero analyte signal i.e. the intercept of the regression line with the x-axis. All aliquots are subjected to steps (S-1) to (S-4) and then in step (S-5) during the evaluation of the electromagnetic radiation resulting from the fluorescence of the retinyl containing substances, the data are plotted such that the amount of retinyl standard added is on the x-axis and the instrument response to the fluorescence signal is on the y-axis. The relevant procedure is described in Example 6. The procedure described in

Example 6 corresponds to the standard addition method according to item 3.5 of the Annex of the "Commission Decision of 12 August 2002 implementing Council Directive 96/23/EC concerning the performance of analytical methods and the interpretation of results (notified under document number C(2002) 3044)".

Because the amount of retinyl is obtained from the result of the standard addition method, a calibration function corresponding to the respective oil can be obtained from this result by a skilled person. Further samples can be applied to the same reversed-phase chromatography plate, preferably the reversed phase thin layer chromatography plate, more preferably the reversed-phase high-performance thin-layer chromatography plate, to calculate their retinyl content from their signal intensities by inserting the measured signal intensities into the calibration function.

In many cases, the use of the standard addition method leads to favourably accurate results when carrying out the method according to the present invention. This is achieved with relatively low effort i.e. applying the standard addition method requires relatively low effort compared to e.g. using high performance liquid chromatography methods.

The advantage of:

"placing a defined amount A1 of a retinyl containing substance into a vial V1 and a defined amount A2 of the retinyl containing substance into a vial V2, with the amount A2 being twice as much as the amount A1 and optionally placing a defined amount $A_m$ of the retinyl containing substance into a vial $V_n$ with the amount $A_m$ being m times as much as the amount A1 and m being an integer ranging from 3 to 1.000, preferably from 3 to 100, and n being an integer ranging from 3 to 100, preferably from 3 to 10 and further preferred from 3 to 5,"
and only thereafter

"adding a defined amount of a retinyl containing composition, preferably a liquid retinyl containing composition, to at least one of the vials V1, V2, Vn, preferably to 3 to 10 vials V1, V2, Vn, more preferably to 3 to 5 vials V1, V2, Vn,"

as described above is that proceeding this way permits an easy and fast calibration of the fluorescence signal against the defined amounts A1, A2 and optionally $A_m$ of retinyl in vials V1, V2 and optionally $V_n$ and thus a straightforward quantification of the unknown amount of retinyl in the liquid test sample.

No additional comparative samples C1, C2 and no standard samples ST1, ST2 are required upon realizing this alternative of the method of the invention. It already suffices to add the test sample to vials V1, V2 and optionally $V_n$ followed by mixing, and placing a defined volume of the test sample on a first lane of the reversed-phase chromatography plate, the same defined volume of V1 onto a second lane of the reversed-phase chromatography plate, the same defined volume of V2 onto a third lane of the reversed-phase chromatography plate and optionally the same defined volume of $V_n$ onto at least one further lane.

A further advantage of this method embodiment of the current invention is its immediate usability with a large variety of edible oils without the need for more complex steps of sample preparation for calibration purposes. This further elaborated method step of the current invention gives quantitative results with whatever edible oil being used since the calibrating substance retinyl in the amounts A1, A2 and optionally $A_m$ is already placed in vials V1, V2 and optionally $V_n$ prior to adding the edible oil to be assayed. In other words, a respective additional calibration for each individual edible oil, exhibiting its intrinsic enhancement behaviour, is not required.

The present invention, with its various aspects, especially and preferably relates to a method (as described above, preferably as identified above as preferred), wherein

- after removing the mobile phase by means of evaporation in step (S-3), the reversed-phase chromatography plate with the retinyl containing substances in contact therewith is placed in a suitable dark box, wherein excitation of fluorescence in the retinyl containing substances and detection of the electromagnetic radiation resulting from the fluorescence of the retinyl containing substances is performed.

The use of a suitable dark box is optionally combined with suitable optical filters. The use of a suitable dark box helps to prevent electromagnetic radiation not resulting from fluorescence in the retinyl containing substances from reaching the detector. The skilled person easily constructs a suitable dark box without undue burden based on his common general knowledge. The skilled person selects and uses suitable optical filters based on his common general knowledge. In many cases it is preferred that a first optical filter is used between the light source and the reversed-phase chromatography plate. This first optical filter should be selected as to pass the excitation wavelength and block all wavelengths longer than the excitation wavelength to a sufficient extent. In many cases it is preferred to use a second optical filter between the reversed-phase chromatography plate and the means for detection of the electromagnetic radiation resulting from the fluorescence of the retinyl containing substances. This second optical filter should be selected as to block the excitation wavelength to a sufficient extent; in many cases the second optical filter is selected as to additionally block all wavelengths smaller than the excitation wavelength. In some cases the second filter is not necessary, for example, when a means of detection is used that cannot detect light of the wavelength used for excitation.

The present invention, with its various aspects, especially and preferably relates to a method (as described above, preferably as identified above as preferred), wherein

- the defined volume of a test sample of a retinyl containing composition which is applied to the reversed-phase chromatography plate, preferably to the reversed-phase high-performance thin-layer chromatography plate, ranges from 0.5 microliters to 10 microliters, preferably from 0.8 microliters to 5 microliters, more preferably from 1 microliter to 3 microliters, most preferably from 1.0 microliter to 2.0 microliters, each defined volume respectively containing retinyl containing substances;
  and/or
- the presence of retinyl containing substances in a test sample can be determined for retinyl concentrations in the test sample in the range of 1 ng/band to 150 ng/band, preferably of 1 ng/band to 100 ng/band, more preferably of 1 ng/band to 75 ng/band, most preferably of 2 ng/band to 50 ng/band.

In many cases, it is preferred that the defined volume of a test sample of a retinyl containing composition to be applied onto the reversed phase chromatography plate is in the above range; larger volumes are frequently less favourable in the field of the present invention as more sample substance is used up and frequently more waste results when larger sample sizes are used.

In many cases, it is favourable when retinyl concentrations in the test sample are in the defined ranges. Especially favourable combinations of positive effects are achieved when carrying out the method according to the present invention within these ranges. In many cases, smaller concentrations do not allow reliable detection and larger concentrations are not necessary for detection and lead to an unnecessarily large amount of waste material.

The invention also relates to a use of the method (as described above, preferably as identified above as preferred), to quantify the retinyl content in retinyl containing substances in a retinyl containing composition, preferably to quantify the retinyl content in retinyl containing substances in an edible oil, more preferably in an edible plant oil, even more preferably in an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower.

The use of the method according to the present invention to quantify retinyl content in retinyl containing substances in a retinyl containing composition as defined above leads to especially favourable results and combination of effects. Using the method according to the present invention in the defined way results in minimal adverse effects from interfering substances in plant oils and good detectability of retinyl amounts down to concentrations of 25000 IU/kg oil.

The invention also relates to a test-kit for quantifying retinyl containing substances (as described above, preferably as identified above as preferred), comprising

- n-heptane and/or cyclohexane,
- a means for applying a test-sample of defined volume to a reversed phase chromatography plate, preferably to a reversed-phase high-performance thin-layer chromatography plate, preferably at least one glass capillary, more preferably at least one 1 microliter glass capillary,
- a reversed phase chromatography plate, preferably a reversed-phase high-performance thin-layer chromatography plate,
  and
- at least one defined amount A1, A2, $A_m$ of a retinyl containing substance;

  preferably, the test-kit comprises

  - n-heptane and/or cyclohexane,
  - at least one glass capillary, preferably at least one 1 microliter glass capillary,
  - a reversed phase chromatography plate, preferably a reversed-phase high-performance thin-layer chromatography plate,
  - at least one defined amount A1, A2, $A_m$ of a retinyl containing substance,
  - suitable means for exciting fluorescence of retinyl containing substances,
    and
  - a suitable dark box for fluorescence measurements;

  more preferably, the test-kit comprises

- n-heptane and/or cyclohexane
- at least one glass capillary, preferably at least one 1 microliter glass capillary,
- a reversed phase chromatography plate, preferably a reversed-phase high-performance thin-layer chromatography plate,
- at least one defined amount A1, A2, $A_m$ of a retinyl containing substance,
- suitable means for exciting fluorescence of retinyl containing substances,
- suitable means for detecting fluorescence of retinyl containing substances, and
- a suitable dark box for fluorescence measurements;

even more preferably, the test-kit comprises

- n-heptane and/or cyclohexane
- at least one glass capillary, preferably at least one 1 microliter glass capillary,
- a reversed phase chromatography plate, preferably a reversed-phase high-performance thin-layer chromatography plate,
- at least one defined amount A1, A2, $A_m$ of a retinyl containing substance,
- suitable means for exciting fluorescence of retinyl containing substances,
- suitable means for detecting fluorescence of retinyl containing substances,
- a suitable dark box for fluorescence measurements and optionally
- a suitable computing device for evaluation of the measurements.

Suitable means for applying a test-sample of defined volume to a reversed-phase high-performance thin-layer chromatography plate are known to the skilled person from his general knowledge. Glass capillary tubes are suitable means in this regard.

Suitable means for exciting fluorescence of retinyl containing substances are known to the skilled person from his general knowledge; all suitable means can be part of the test-kit of the present invention. Preferably, light-weight means, more preferably battery powered light-weight means, for exciting fluorescence of retinyl containing substances are used as part of the test-kit, thus allowing high mobility and not depending on external infrastructure for functioning whilst using the test-kit. In many cases it is preferred that the means for exciting fluorescence have a power below 1 W in order to reduce the hazardous potential.

In many cases it is preferred for the suitable dark box for fluorescence measurements to have dimensions of 20 cm × 20 cm × 20 cm or less. This makes it easy to use said box in mobile applications, especially in applications independent of a laboratory.

The "at least one defined amount A1, A2, $A_m$ of a retinyl containing substance" comprised by the test-kit is preferably also suitable for the comparative sample/samples C1, C2 as previously disclosed.

A further extension of the test-kit as disclosed in at least one of the previous embodiments comprises at least one recipient for or with the mobile phase.

When using the test-kit of the present invention, evaluation preferably includes the standard addition method according to herein Example 6. The suitable computing device for evaluation of the measurements preferably includes means to display the result of fluorescence intensity as well as the amounts and/or concentrations of retinyl moieties. In many cases it is preferred, that the suitable computing device for evaluation of the measurements is a smartphone with a suitable software application.

The test-kit of the present invention is particularly suitable for performing the method of the present invention in a favourably reproducible and efficient manner. With the test-kit the method of the present invention is performed in a particularly rapid way i.e. with low time effort. With the test-kit the method of the present invention is performed in an inexpensive way with low running costs. With the test-kit according to the present invention, many of the effects and advantages associated with the method according to the present invention are realized to a favourably positive extent. The advantages specifically include an excellent separation of retinyl containing substances and substances that adversely affect their detection by means of fluorescence, an excellent fluorescence enhancement, simple and relatively low-cost equipment. When using the test-kit of the present invention for performing the method of the present invention, the effort for calibration is positively low.

The present invention, with its various aspects, especially and preferably relates to a test kit (as described above, preferably as identified above as preferred), wherein the test-kit further comprises:

- a vial V1 with a defined amount A1 of the retinyl containing substance,
  and

- a vial V2 with a defined amount A2 of the retinyl containing substance, with the amount A2 being twice as much as the

amount A1,
and optionally

- vials $V_n$ with a defined amount $A_m$ of retinyl containing substance, the defined amount $A_m$ being m times as much as the amount A1 in vial V1 and m being an integer ranging from 3 to 1.000, preferably from 3 to 100, and n being an integer ranging from 3 to 100, preferably from 3 to 10 and further preferred from 3 to 5;
preferably

- a light-protected vial V1 with a defined amount A1 of the retinyl containing substance,
and

- a light-protected vial V2 with a defined amount A2 of the retinyl containing substance, with the amount A2 being twice as much as the amount A1, and optionally

- light-protected vials $V_n$ with a defined amount $A_m$ of retinyl containing substance, the defined amount $A_m$ being m times as much as the amount A1 in light-protected vial V1 and m being an integer ranging from 3 to 1.000, preferably from 3 to 100, and n being an integer ranging from 3 to 100, preferably from 3 to 10 and further preferred from 3 to 5;
more preferably

- a light-protected vial V1 with a defined amount A1 of the retinyl containing substance stored under an inert gas,
and

- a light-protected vial V2 with a defined amount A2 of the retinyl containing substance stored under an inert gas, with the amount A2 being twice as much as the amount A1,
and optionally

- light-protected vials $V_n$ with a defined amount $A_m$ of retinyl containing substance stored under an inert gas, the defined amount $A_m$ being m times as much as the amount A1 in light-protected vial V1 and m being an integer ranging from 3 to 1.000, preferably from 3 to 100, and n being an integer ranging from 3 to 100, preferably from 3 to 10 and further preferred from 3 to 5.

The term "inert gas" is understood to comprise at a gas selected from the group consisting of nitrogen, neon, argon, krypton, xenon, sulphur hexafluoride or mixtures thereof.

The advantage of the test kit equipped with a vial V1 and a vial V2 and optionally with vials $V_n$ as described above is, that such a test kit permits an easy and fast calibration of the fluorescence signal against the defined amounts A1, A2 and optionally $A_m$ of retinyl in vials V1, V2 and optionally $V_n$ and thus a quantification of the unknown amount of retinyl in the liquid test sample.

No additional comparative samples C1, C2 (as describes above) and no standard samples ST1, ST2 (as described above) are required upon realizing this variant of the method of the invention. It already suffices to add the test sample to vials V1, V2 and optionally $V_n$ followed by mixing, and placing a defined volume of the sample on a first lane of the reversed-phase chromatography plate, the same defined volume of V1 onto a second lane of the reversed-phase chromatography plate, the same defined volume of V2 onto a third lane of the reversed-phase chromatography plate and optionally the same defined volume of $V_n$ onto at least one further lane.

A further advantage of this aspect of the current invention is the usability with a large variety of edible oils without the need for more complex steps of sample preparation for calibration purposes. This aspect of the current invention gives quantitative results with whatever edible oil being used since the calibrating substance retinyl in the amounts A1, A2 and optionally $A_m$ is already placed in vials V1, V2 and optionally $V_n$ prior to adding the edible oil to be assayed. In other words, a respective additional calibration for each individual edible oil, exhibiting its intrinsic enhancement behaviour, is not required.

The invention also relates to a use of the test-kit (as described above, preferably as identified above as preferred), to quantify retinyl containing substances, preferably to quantify retinyl containing substances in a sample of a retinyl containing composition more preferably to quantify retinyl containing substances in an edible oil, even more preferably in an edible plant oil, and/or an edible animal oil, yet more preferably in an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower.

A preferred animal oil is cod liver oil. In many cases, the use of the test-kit for plant oils is more preferred than the use for animal oils.

The effects and advantages set out above in connection with the method according to the present invention, the use of the method according to the present invention and the test-kit according to the present invention are achieved when the test-kit of the present invention is used in the defined way.

## Examples

In the context of this text, the term "VAP" denotes the substance "vitamin A palmitate" also known as "[(2E,4E,6E,8E)-3,7-Dimethyl-9-(2,6,6-trimethylcyclohex-1-en-1-yl)nona-2,4,6,8-tetraenyl] hexadecanoat" with a molecular weight of 524.8 g/mol. The activity of VAP can be expressed in international units.

One gram of pure vitamin A palmitate is equivalent to 1818000 IU vitamin A is equal to 545000 μg RAE (Retinol activity equivalents) or RE (Retinol equivalents) per gram (Pharmacopeia European 10$^{th}$ Edition).

For fortification purposes, two solutions of VAP (≥ 99.5 %, Merck, Darmstadt, Germany) were prepared by dissolving 1 mg VAP in 1 mL n-heptane (1000 μg/1000 μL, 1 μg/1 μL, VAP solution 1), then dissolving 100 μL of this solution in 900 μL n-heptane (100 μg/1000 μL, 0.1 μg/1 μL, VAP solution 2). VAP solution 2 was used for enrichment below 1 μg, and VAP solution 1 was used for enrichment above 1 μg.

The choice of substances and equipment in the examples is only exemplary; especially other oils, other molecules containing retinyl moieties, other retinyl containing compositions other amounts, other reversed-phase thin-layer chromatography plates or high-performance thin-layer chromatography plates, other mobile phases and other equipment may be used. The skilled person adapts the procedures described below according to the requirements of the individual case.

### Example 1

To 200 μL of a commercially available VAP-free soybean oil, 6 μg VAP, corresponding to 10.9 IU (as solution 1 of VAP in n-heptane as defined above) were added so that the mixture contained VAP in a concentration of circa 55000 IU/kg soybean oil (exact concentration depending in particular also on the exact density of the oil); then, n-heptane was added for dilution until a total volume of 2 mL (soybean oil + VAP + n-heptane) was reached, resulting in a diluted mixture.

Six 0.2 mL aliquots were prepared from this mixture. Five of the aliquots (aliquots 2 to 6) were further fortified with VAP (with a solution of VAP in n-heptane as defined above), the first aliquot was used without further fortification. To the second aliquot, 0.3 μg VAP (as solution of VAP in n-heptane as defined above) were added, to the third aliquot, 0.6 μg VAP were added, to the fourth aliquot, 1.2 μg VAP were added, to the fifth aliquot, 2.4 μg VAP were added, to the sixths aliquot, 4.8 μg VAP were added. Thereafter, 2 μL of each solution were applied to a respective individual lane of a reversed phase high performance thin layer chromatography plate (HPTLC silica gel 60 RP-18 plate (10 cm × 10 cm, Merck, Darmstadt, Germany)) using a 2 μL glass capillary.

2 μL of the first aliquot (only containing 6 ng of VAP with no further VAP fortification) were added to lane 1.2 μL of the second aliquot (with 0.3 μg VAP added) were added to lane 2, 2 μL of the third aliquot (with 0.6 μg VAP added) were added to lane 3, 2 μL of the fourth aliquot (with 1.2 μg VAP added) were added to lane 4, 2 μL of the fifth aliquot (with 2.4 μg VAP added) were added to lane 5 and 2 μL of the sixths aliquot (with 4.8 μg VAP added) were added to lane 6. The plate with all 6 lanes was then placed in the development chamber (Twin Trough Chamber 10 cm × 10 cm from CAMAG, Allschwil, Switzerland) using a mixture of acetone and water in a volume ratio of 19:1 as mobile phase. A mobile phase height of 3 mm in the chamber was used and the plate was developed up to 70 mm for 16 minutes (mobile phase moved from plate bottom up to 70 mm in the closed chamber), so that the retinyl containing substances (VAP) in lanes 1 to 6 were separated from at least those substances in the soybean oil that disturb fluorescence measurements.

Thereafter, the mobile phase (acetone and water in a volume ratio of 19:1) was removed by means of evaporation at ambient conditions so that the VAP (retinyl containing substance) was in direct contact with the RP-18 plate in lanes 1 to 6.

Thereafter the plate was placed in a suitable dark box (the silica gel side of the plate was facing up) and a fluorescence image of the chromatogram was obtained upon irradiation with an excitation wavelength of 366 nm.

The resulting fluorescence emission was detected as a fluorescence image using the smartphone camera of an LG G7 ThinQ mobile phone. A corresponding densitogram was derived from the fluorescence image using the program TLCyzer (https://tlcyzer.github.io), following the instructions in the manual available on the same website. As told by the manual, three reference points are to be marked and a %-value must be assigned to three different spots or bands of the fluorescence image. The brightest spot or band of the fluorescence image was assigned to 100 % (spot or band of lane 6) and the brightest spots or bands of the next two lanes (lane 5 and lane 4) were set to 50 % and 25 % respectively. The other spots or bands of the fluorescence image (except that for the oil free VAP, which was not marked) were marked without additional assignment of a percentage. Afterwards, the program calculated the percentages of the unmarked spots or

bands in the fluorescence image. The corresponding percentage-ng/spot or band pairs were used to prepare a polynomial regression function using Microsoft Excel.

The resulting polynomial regression function was placed into the text field of https://www.wolframalpha.com. By pressing the "compute input" button on the page the relevant zero of the polynomial was calculated to be 6 ng/band, which corresponds to the VAP amount of 6 ng/band present in the 2 μL of the first aliquot of soybean oil tested and applied to the first lane. The amount of 6 ng/band was expected because the test sample, supplemented with the lowest amount of VAP, contained 6 ng VAP/2 μL test sample and 2 μL thereof were applied. The method is therefore suitable for detecting VAP in soybean oil at concentration of 54500 IU/kg soybean oil.

Example 2

An amount of 200 μL of a VAP-free, commercially available sunflower oil was mixed with 6 μg VAP, corresponding to 10.9 IU (as solution of VAP in n-heptane as defined above), resulting in a mixture containing VAP in a concentration of circa 55000 IU/kg sunflower oil (exact concentration depending in particular also on the exact density of the oil); then, n-heptane was added for dilution until a total volume of 2 mL (sunflower oil + VAP + n-heptane) was reached.

Six 0.2 mL aliquots were prepared from this mixture. Five of the aliquots (aliquots 2 to 6) were further fortified with VAP (with a solution of VAP in n-heptane as defined above), the first aliquot was used without further fortification. To the second aliquot, 0.3 μg VAP were added, to the third aliquot, 0.6 μg VAP were added, to the fourth aliquot, 1.2 μg VAP were added, to the fifth aliquot, 2.4 μg VAP were added, to the sixths aliquot, 4.8 μg VAP were added. Thereafter, 2 μL of each solution were applied to a respective individual lane of a reversed phase high performance thin layer chromatography plate (HPTLC silica gel 60 RP-18 plate (10 cm × 10 cm, Merck, Darmstadt, Germany)) using a 2 μL glass capillary.

2 μL of the first aliquot (with no further VAP fortification) were added to lane 1.2 μL of the second aliquot (with 0.3 μg VAP added) were added to lane 2, 2 μL of the third aliquot (with 0.6 μg VAP added) were added to lane 3, 2 μL of the fourth aliquot (with 1.2 μg VAP added) were added to lane 4, 2 μL of the fifth aliquot (with 2.4 μg VAP added) were added to lane 5 and 2 μL of the sixths aliquot (with 4.8 μg VAP added) were added to lane 6. The plate with all 6 lanes was then placed in the development chamber (Twin Trough Chamber 10 cm × 10 cm from CAMAG, Allschwil, Switzerland) using pure ethanol as mobile phase. A mobile phase height of 3 mm in the chamber was used and the plate was developed up to 80 mm (mobile phase moved from plate bottom up to 80 mm in the closed chamber), so that the retinyl containing substances (VAP) in lanes 1 to 6 were separated from at least those substances in the soybean oil that disturb fluorescence measurements.

Thereafter, the mobile phase (ethanol) was removed by means of evaporation at ambient conditions so that at least the VAP (retinyl containing substance) was in contact with the RP-18 plate in lanes 1 to 6.

Thereafter, the plate was placed in a dark box (Visualizer 2, CAMAG, Allschwil, Switzerland). The silica gel side of the plate was facing up. The plate in the box was irradiated with UV light with a wavelength of 366 nm (Visualizer 2, CAMAG, Allschwil, Switzerland) and a fluorescence image was obtained (Visualizer 2, CAMAG, Allschwil, Switzerland). The fluorescence image was investigated videodensitometrically, resulting in a densitogram, using visionCATS software (version 3.0, CAMAG, Allschwil, Switzerland).

A calibration function was determined using said software. The signal areas were marked manually and the report function of the software was then used to automatically generate a calibration function using the peak areas. The coefficient of determination $R^2$ was 0.9999. "www.wolframalpha.com" was used - as described in above Example 1 - to determine the relevant zero of the calibration function, which represents the calculated amount of VAP/band. The relevant zero of the polynomial was calculated to be 6 ng/band, which corresponds to the applied VAP amount of 6 ng/band present in 2 μL of the first aliquot of the sunflower oil tested. The method is therefore suitable for detecting VAP at concentration of about 55000 IU/kg sunflower oil. The amount of 6 ng/band was expected because by the test sample contained 6 ng VAP/2 μL test sample and 2 μL thereof were applied.

Example 3

An amount of 200 μL of VAP-free refined palm oil was fortified with 6 μg VAP, corresponding to 10.9 IU (as solution of VAP in n-heptane as defined above), resulting in a mixture containing VAP in a concentration of circa 55000 IU/kg refined palm oil (exact concentration depending in particular also on the exact density of the oil); then, n-heptane was added for dilution until a total volume of 2 mL (refined palm oil + VAP + n-heptane) was reached.

Six 0.2 mL aliquots were prepared from this mixture. Five of the aliquots (aliquots 2 to 6) were further fortified with VAP (with a solution of VAP in n-heptane as defined above), the first aliquot (containing only 600 ng of VAP, i.e. 1.09 IU) was used without further fortification. To the second aliquot, 0.3 μg VAP were added, to the third aliquot, 0.6 μg VAP were added, to the fourth aliquot, 1.2 μg VAP were added, to the fifth aliquot, 2.4 μg VAP were added, to the sixths aliquot, 4.8 μg VAP were added. Thereafter, 2 μL of each solution were applied to a respective individual lane of a reversed phase high performance thin layer chromatography plate (HPTLC silica gel 60 RP-18 plate, 10 cm × 10 cm, Merck, Darmstadt,

Germany) using a 2 μL glass capillary.

Ethanol was poured into a glass jar (large enough to hold the HPTLC RP-18 plate), filling the jar to 2 mm (from the bottom of the glass jar). The HPTLC RP-18 plate was placed in the jar and the jar with the HPTLC RP-18 plate inside was sealed with a lid. After the liquid had risen 80 mm (measured from the bottom of the plate), the HPTLC RP-18 plate was removed from the jar. The solvent was allowed to evaporate under ambient conditions (5 minutes). The plate was placed in a dark box (Visualizer 2, CAMAG, Allschwil, Switzerland). The silica gel side of the plate was facing up. The plate in the box was irradiated with UV light with a wavelength of 366 nm (Visualizer 2, CAMAG, Allschwil, Switzerland) and an image was taken (Visualizer 2, CAMAG, Allschwil, Switzerland). The image was investigated videodensitometrically using visionCATS software (version 3.0, CAMAG, Allschwil, Switzerland). A calibration function was determined using said software and using the peak areas. The coefficient of determination $R^2$ was 0.9999. "www.wolframalpha.com" was used to determine the relevant zero of the calibration function (as described in above Example 1), which represents the calculated amount of VAP/band. The calculated amount was 5,9 ng/band whereby 6 ng/band present in 2 μL of the first aliquot were expected. The amount of 6 ng/band was expected because the test sample contained 6 ng VAP/2 μL test sample and 2 μL thereof were applied.

Example 4

An amount of 200 μL linseed oil containing an unknown amount of VAP was added to 1800 μL n-heptane, resulting in a diluted mixture (1:10 dilution of linseed oil in n-heptane).

Five vials were filled with different amounts of VAP (as solution of VAP in n-heptane as defined above): To the first vial, 0.3 μg VAP were added, to the second vial, 0.6 μg VAP were added, to the third vial, 1.2 μg VAP were added, to the fourth vial, 2.4 μg VAP were added, to the fifth vial, 4.8 μg VAP were added.

A 0.2 mL aliquot of the diluted mixture was added into each of the vials. The content was mixed by shaking each vial respectively. Thereafter, 2 μL of each solution were applied to a respective individual lane of a reversed phase high performance thin layer chromatography plate (HPTLC silica gel 60 RP-18 plate, 10 cm × 10 cm, Merck, Darmstadt, Germany) using a suitable glass capillary.

2 μL from the first vial (with 0.3 μg VAP added) were added to lane 1, 2 μL from the second vial (with 0.6 μg VAP added) were added to lane 2, 2 μL from the third vial (with 1.2 μg VAP added) were added to lane 3, 2 μL from the fourth vial (with 2.4 μg VAP added) were added to lane 4 and 2 μL from the fifth vial (with 4.8 μg VAP added) were added to lane 5; 2 μL from the vial containing the diluted mixture (1:10 dilution of linseed oil in n-heptane) with an unknown content of VAP were added to the sixths lane.

Ethanol was poured into a glass jar (large enough to hold the HPTLC RP-18 plate), filling the jar to 2 mm (from the bottom of the glass jar). The HPTLC RP-18 plate was placed in the jar and the jar with the HPTLC RP-18 plate inside was closed with a lid. After the solvent front had risen to 80 mm (measured from the bottom of the plate), the HPTLC RP-18 plate was removed from the jar. The solvent was allowed to evaporate under ambient conditions (5 minutes). The plate was placed in a dark box (Visualizer 2, CAMAG, Allschwil, Switzerland). The silica gel side of the plate was facing up. The plate in the box was irradiated with UV light with a wavelength of 366 nm (Visualizer 2, CAMAG, Allschwil, Switzerland) and an image was taken (Visualizer 2, CAMAG, Allschwil, Switzerland). The image was investigated videodensitometrically using visionCATS software (version 3.0, CAMAG, Allschwil, Switzerland). A calibration function was determined. Then, "www.wolframalpha.com" was used to determine the relevant zero of the calibration function (as described in above Example 1), which represents the calculated amount of VAP/band. The calculated amount for the 2 μL from the vial containing the diluted mixture (1:10 dilution of linseed oil in n-heptane) with an unknown content of VAP, was 2 ng/band. This corresponded to approximately 25000 IU/kg linseed oil. This result can be validated with standard HPLC analytics.

Example 5

A series of tests was performed with commercially available refined soybean oil, sunflower oil and palm oil spiked with VAP (100 mg/kg) to examine the dilution in solvent required for best testing conditions. Therefore, the vitamin A fortified edible oils were blended into n-heptane (volume/volume) at 10 %, 20 %, 30 %, 40 % and 50 % and the functionality of 1 μL and 2 μL commercially available medical glass capillaries were tested for applying the oil in solvent solutions.

Both types of capillaries could be filled completely and satisfactorily with the respective oil solvent blends, even though at 50% palm oil the 2 μL filling was notably slow. Filled capillaries were emptied onto a thin layer chromatography plate (HPTLC silica gel 60 RP-18 plate, 10 cm × 10 cm, Merck, Darmstadt, Germany) by carefully tapping on the same spot of the plate. Both types of capillaries could be emptied rapidly and completely with all oil blends up to a concentration of 20% oil. Higher concentrations slowed the emptying process or prevented complete emptying.

The chromatographic movement of the oil front on the TLC plate of the oil solvent blends after application of 1 μL and 2 μL with respective capillaries was examined. Using the mobile phase acetone:water (95:5, by volume) the movement of the applied oil containing 100 mg VAP per kg oil was examined over the period of 10 minutes. Oil

concentration of up to 20% resulted in a movement in clear bands with VAP detectable at the front of the test oil band for all oils tested. With higher oil concentrations no clear separation of VAP from the carrier oil was observed.

Example 6

Practically, to determine the unknown concentration of retinyl in a liquid test sample by using the standard addition method, the approach specified in this example is.

Samples were prepared according to Example 4 hereinabove and fluorescence signals were excited and recorded according to Example 4 hereinabove. In Example 4 the added standards are VAP standards and are 0.3 μg, 0.6 μg, 1.2 μg VAP, 2.4 μg VAP and 4.8 μg VAP respectively.

The resulting signals were plotted, with retinyl concentration according to the standards used on the x-axis and the signal (signal intensity) on the y-axis. Then, a regression line as described by Equation 1 was determined by the least squares method

$$\text{Equation 1:} \qquad S = mA + b$$

where "S" is the instrument response (signal), "A" is the amount of standard added, "m" is the slope of the regression line and "b" is the intercept of the regression line with the x-axis i.e. the amount of unknown retinyl in the sample prior to the addition of the retinyl standard.

The intercept of the regression line with the x-axis ("b") was determined. The intercept multiplied by -1 represents the amount of retinyl present without the added standard i.e. the unknown amount of retinyl in the original sample.

## Claims

**1.** Method for detecting the amount of retinyl in a retinyl containing composition, the method comprising the following steps:

(S-1) applying a defined volume of a liquid test sample of a retinyl containing composition to a reversed-phase chromatography plate;
(S-2) after applying the defined volume of the liquid test sample: separating the retinyl containing substances contained in the defined volume of the liquid test sample of the retinyl containing composition from other substances in the liquid test sample using the reversed-phase chromatography plate and a mobile phase;
(S-3) after separating the retinyl containing substances from other substances: removing the mobile phase by means of evaporation, so that at least the retinyl containing substances are in contact with the reversed-phase thin-layer chromatography plate;
(S-4) after removing the mobile phase by means of evaporation: excitation of fluorescence in the retinyl containing substances on the reversed-phase chromatography plate using electromagnetic radiation and detection of electromagnetic radiation resulting from the fluorescence of the retinyl containing substances;
(S-5) after detection of the electromagnetic radiation resulting from the fluorescence of the retinyl containing substances: Evaluation of the electromagnetic radiation resulting from the fluorescence of the retinyl containing substances to quantify the amount of retinyl present in the test sample.

**2.** The method according to claim 1, wherein

- the mobile phase is selected from the group consisting of:

  - diethyl ether
  - cyclohexane
  - toluene
  - chloroform
  - acetonitrile
  - methanol
  - dichloromethane,
  - acetic acid,
  - ethanol
  - acetone

and
- water;

preferably from the group consisting of

- acetone
and
- water;

with preference, the mobile phase consists of acetone and water in a ratio of 99:1 to 1:99, with more preference in a ratio of 98:2 to 90:10, with even more preference in a ratio of 97:3 to 93:7, with most preference in a ratio of 95:5.

**3.** The method according to any of the preceding claims, wherein

- the step of separating the retinyl containing substances from other substances in the retinyl containing composition using the reversed-phase chromatography plate and a mobile phase (S-2) is carried out in a container sufficiently preventing the evaporation of solvent during the time span needed for separation;
and/or
- the step of removing the mobile phase by means of evaporation (S-3) is carried out for a time period ranging from 30 seconds to 5 minutes, preferably ranging from 45 seconds to 3 minutes, more preferably ranging from 1 minute to 2 minutes;
and/or
- wherein the step of removing the mobile phase by means of evaporation is carried out supported by means of

- hot air
and/or
- cold air
and/or
- by incubating at ambient pressure and ambient temperature, until no remaining liquid is visible on the chromatography plate, preferably by means of incubating at ambient pressure and ambient temperature until no remaining liquid is visible on the chromatography plate;
and/or

- the mobile phase has a vapour pressure at 20°C ranging from 1.5 kPa to 50 kPa.

**4.** The method according to any of the preceding claims, wherein

- the reversed-phase chromatography plate is selected from the group consisting of:

- reversed phase high performance thin layer chromatography plates and
- reversed phase thin layer chromatography plates;
preferably the reversed-phase chromatography plate is a reversed-phase high-performance thin-layer chromatography plate selected from the group consisting of:

- RP-2,
- RP-8
and
- RP-18;
and/or

- the test sample of the retinyl containing composition, applied to a reversed-phase high-performance thin-layer chromatography plate has a volume of 0.5 microliters to 10 microliters, preferably of 0.8 microliters to 5 microliters, most preferably of 1 microliter.

**5.** The method according to any of the preceding claims, wherein

- separating the retinyl containing substances from other substances in the retinyl containing composition using the reversed-phase chromatography plate and a mobile phase takes from 2 minutes to 60 minutes, preferably

from 3 minutes to 30 minutes, more preferably from 5 minutes to 15 minutes, most preferably from 7 minutes to 14 minutes.

**6.** The method according to any of the preceding claims, wherein

- the retinyl containing composition is an edible oil, preferably an edible plant oil, more preferably an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower;
and/or
- the retinyl containing substances whose fluorescence is excited, and whose electromagnetic radiation resulting from the fluorescence is detected (S-4), are selected from the group consisting of:

  - retinol
  and
  - retinol derivative,
  preferably the retinyl containing substances are retinol derivatives; with preference the retinyl containing substances are retinol derivatives, selected from the group consisting of:

    - vitamin A palmitate
    - vitamin A acetate
    - vitamin A propionate
    and
    - mixtures thereof.

**7.** The method according to any of the preceding claims, wherein

- the retinyl containing composition is an edible oil and at least a portion of the edible oil is diluted with a suitable solvent, preferably n-heptane or cyclohexane, more preferably n-heptane, prior to taking a liquid test sample from the diluted edible oil and applying said liquid test sample as a liquid test sample of a retinyl containing composition to a reversed-phase high-performance thin-layer chromatography plate.

**8.** The method according to any of the preceding claims, wherein

- the excitation of fluorescence in the retinyl containing substances on the reversed-phase chromatography plate using electromagnetic radiation (S-4) is achieved by using an excitation wavelength in the range from 250 nm to 400 nm, preferably in the range from 270 nm to 400 nm, most preferably in the range from 320 nm to 370 nm;
and/or
- the detection of the electromagnetic radiation resulting from the fluorescence of the retinyl containing substances is achieved in the range from 410 nm to 600 nm, preferably in the range from 450 nm to 530 nm more preferably in the range from 460 nm to 510 nm, most preferably in the range from 475 nm to 479 nm.

**9.** The method according to any of the preceding claims, wherein

- the retinyl containing composition is an edible oil, preferably an edible plant oil, more preferably an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower;
and
- the retinyl containing substances are retinol derivatives, selected from the group consisting of:

  - vitamin A palmitate
  - vitamin A acetate
  - vitamin A propionate

and
- mixtures thereof;
and

- the reversed-phase high-performance thin-layer chromatography plate is selected from the group consisting of

- RP-2,
- RP-8
and
- RP-18;
and

- detection of the electromagnetic radiation resulting from the fluorescence of the retinyl containing substances in contact with the reversed-phase high-performance thin-layer chromatography plate is increased by a factor of at least 2, preferably by a factor of at least 5, more preferably by a factor of at least 10, even more preferably by a factor of at least 20, compared to the fluorescence of the same amount of these retinyl containing substances in contact with the same area of a normal phase high-performance thin-layer chromatography plate.

**10.** The method according to any of the preceding claims,

- wherein the evaluation of the electromagnetic radiation resulting from the fluorescence of the retinyl containing substances to quantify the amount of retinyl-groups present in the test sample comprises the use of at least two standard samples, preferably standard samples containing vitamin A palmitate, vitamin A acetate and/or vitamin A propionate, and comprises employing the standard addition method according to herein Example 6;
and/or
- comprising the steps:

- taking two comparative samples C1 and C2 with the same composition as the liquid test sample,
- adding a defined amount A1 of the retinyl containing substance to comparative sample C1 and a defined amount A2 of the retinyl containing substance to comparative sample C2, the amount A2 being twice as much as the amount A1, so that two standard samples ST1 and ST2 result,
- applying a defined volume of the standard sample ST1 to a second lane and the same volume of the standard sample ST2 to a third lane of the reversed-phase chromatography plate, within 120 seconds after the test sample is applied to the first lane,
and/or

- comprising the steps:

- placing a defined amount A1 of a retinyl containing substance into a vial V1 and a defined amount A2 of the retinyl containing substance into a vial V2, with the amount A2 being twice as much as the amount A1, and optionally placing a defined amount $A_m$ of the retinyl containing substance into a vial $V_n$ with the amount $A_m$ being m times as much as the amount A1 and m being an integer ranging from 3 to 1.000, preferably from 3 to 100, and n being an integer ranging from 3 to 100, preferably from 3 to 10 and further preferred from 3 to 5,
- adding a defined amount of a retinyl containing composition, preferably a liquid retinyl containing composition, to at least one of the vials V1, V2, $V_n$, preferably to 3 to 10 vials V1, V2, $V_n$, more preferably to 3 to 5 vials V1, V2, $V_n$,
- mixing the content of each vial $V_1$, $V_2$, $V_n$,
- applying, within 120 seconds after a defined volume of the liquid test sample is applied to the first lane of the reversed phase chromatography plate, the same defined volume of the vial $V_1$, to a second lane of the reversed chromatography plate and the same defined volume of the vial $V_2$ to a third lane of the reversed-phase chromatography plate and optionally the same defined volume of at least one vial $V_n$ to at least one further lane thereof.

**11.** The method according to any of the preceding claims, wherein

- after removing the mobile phase by means of evaporation in step (S-3), the reversed-phase chromatography plate with the retinyl containing substances in contact therewith is placed in a suitable dark box, wherein excitation of fluorescence in the retinyl containing substances and detection of the electromagnetic radiation resulting from

the fluorescence of the retinyl containing substances is performed.

**12.** The method according to any of the preceding claims, wherein

- the defined volume of a test sample of a retinyl containing composition which is applied to the reversed-phase chromatography plate, preferably to the reversed-phase high-performance thin-layer chromatography plate, ranges from 0.5 microliters to 10 microliters, preferably from 0.8 microliters to 5 microliters, more preferably from 1 microliter to 3 microliters, most preferably from 1 microliter to 2 microliters, each defined volume respectively containing retinyl containing substances;
and/or
- the presence of retinyl containing substances in a test sample can be determined for retinyl concentrations in the test sample in the range of 1 ng/band to 150 ng/band, preferably of 1 ng/band to 100 ng/band, more preferably of 1 ng/band to 75 ng/band, most preferably of 2 ng/band to 50 ng/band.

**13.** Use of the method according to any of the preceding claims 1 to 12, to quantify the retinyl content in retinyl containing substances in a retinyl containing composition, preferably to quantify the retinyl content in retinyl containing substances in an edible oil, more preferably in an edible plant oil, even more preferably in an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower.

**14.** Test-kit for quantifying retinyl containing substances, comprising

- n-heptane and/or cyclohexane,
- a means for applying a test-sample of defined volume to a reversed-phase chromatography plate, preferably to a reversed-phase high-performance thin-layer chromatography plate, preferably at least one glass capillary, more preferably at least one 1 microliter glass capillary,
- a reversed-phase chromatography plate, preferably a reversed-phase high-performance thin-layer chromatography plate,
and
- at least one defined amount A1, A2, $A_m$ of a retinyl containing substance;
preferably, the test-kit comprises

  - n-heptane and/or cyclohexane,
  - at least one glass capillary, preferably at least one 1 microliter glass capillary,
  - a reversed-phase chromatography plate, preferably a reversed-phase high-performance thin-layer chromatography plate,
  - at least one defined amount A1, A2, $A_m$ of a retinyl containing substance,
  - suitable means for exciting fluorescence of retinyl containing substances,
  and
  - a suitable dark box for fluorescence measurements;

more preferably, the test-kit comprises

  - n-heptane and/or cyclohexane
  - at least one glass capillary, preferably at least one 1 microliter glass capillary,
  - a reversed-phase chromatography plate, preferably a reversed-phase high-performance thin-layer chromatography plate,
  - at least one defined amount A1, A2, $A_m$ of a retinyl containing substance,
  - suitable means for exciting fluorescence of retinyl containing substances,
  - suitable means for detecting fluorescence of retinyl containing substances,
  - a suitable dark box for fluorescence measurements
  and
  - a suitable computing device for evaluation of the measurements.

**15.** Test kit according to claim 14, wherein the test-kit further comprises:

- a vial V1 with a defined amount A1 of the retinyl containing substance, and
- a vial V2 with a defined amount A2 of the retinyl containing substance, with the amount A2 being twice as much as the amount A1,
and optionally
- vials $V_n$ with a defined amount $A_m$ of retinyl containing substance, the defined amount $A_m$ being m times as much as the amount A1 in vial V1 and m being an integer ranging from 3 to 1.000, preferably from 3 to 100, and n being an integer ranging from 3 to 100, preferably from 3 to 10 and further preferred from 3 to 5;

preferably

- a light-protected vial V1 with a defined amount A1 of the retinyl containing substance,
and
- a light-protected vial V2 with a defined amount A2 of the retinyl containing substance, with the amount A2 being twice as much as the amount A1, and optionally
- light-protected vials $V_n$ with a defined amount $A_m$ of retinyl containing substance, the defined amount $A_m$ being m times as much as the amount A1 in light-protected vial V1 and m being an integer ranging from 3 to 1.000, preferably from 3 to 100, and n being an integer ranging from 3 to 100, preferably from 3 to 10 and further preferred from 3 to 5;

more preferably

- a light-protected vial V1 with a defined amount A1 of the retinyl containing substance stored under an inert gas, and
- a light-protected vial V2 with a defined amount A2 of the retinyl containing substance stored under an inert gas, with the amount A2 being twice as much as the amount A1,
and optionally
- light-protected vials $V_n$ with a defined amount $A_m$ of retinyl containing substance stored under an inert gas, the defined amount $A_m$ being m times as much as the amount A1 in light-protected vial V1 and m being an integer ranging from 3 to 1.000, preferably from 3 to 100, and n being an integer ranging from 3 to 100, preferably from 3 to 10 and further preferred from 3 to 5.

**16.** Use of the test-kit according to and of the preceding claims 14 or 15 to quantify retinyl containing substances, preferably to quantify retinyl containing substances in a sample of a retinyl containing composition more preferably to quantify retinyl containing substances in an edible oil, even more preferably in an edible plant oil and/or an edible animal oil, yet more preferably in an edible plant oil selected from the group consisting of oils of: Almond, Apricot kernel, Avocado, Basil, Brazil nut, Canola, Cashew, Cocoa, Coconut, Corn, Cottonseed, Grapeseed, Groundnut, Hazelnut, Hemp, Linseed, Macadamia nut, Mustard, Olive, Palm kernel, Palm, Peanut, Rapeseed, Rice bran, Safflower, Sesame, Soybean, Sunflower, Walnut and mixtures thereof, even more preferably an edible plant oil selected from the group consisting of oils of: Canola, Coconut, Groundnut, Mustard, Palm, Peanut, Rapeseed, Soybean, Sunflower.

Europäisches Patentamt
European Patent Office
Office européen des brevets

# EUROPEAN SEARCH REPORT

Application Number
EP 23 19 0990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALI MOHAMMAD ET AL: "Amino acid and vitamin determinations by TLC/HPTLC: review of the current state", CENTRAL EUROPEAN JOURNAL OF CHEMISTRY, CENTRAL EUROPEAN SCIENCE JOURNALS, PL; US; NL; DE, vol. 10, no. 3, 8 March 2012 (2012-03-08), pages 731-750, XP035033931, ISSN: 1644-3624, DOI: 10.2478/S11532-012-0019-0 | 1-10,12, 13 | INV. G01N30/88 G01N30/94 |
| A | * page 734 - page 745 * | 11,14-16 | |
| A | CN 115 219 604 B (SHANGHAI INSTITUTE OF QUALITY INSPECTION AND TECHNICAL RES) 8 August 2023 (2023-08-08) * the whole document * | 1-16 | |
| A | EP 2 919 004 A1 (MERCK PATENT GMBH [DE]) 16 September 2015 (2015-09-16) * paragraphs [0023], [0024], [0038] * | 1-16 | |
| A | DINAN ET AL: "Thin-layer chromatography of ecdysone acyl esters and their 2,3-acetonide derivatives", JOURNAL OF CHROMATOGRAPHY A, ELSEVIER, AMSTERDAM, NL, vol. 411, 1 January 1987 (1987-01-01), pages 379-392, XP026487226, ISSN: 0021-9673, DOI: 10.1016/S0021-9673(00)93989-X [retrieved on 1987-01-01] * page 382 - page 384 * | 1-16 | TECHNICAL FIELDS SEARCHED (IPC) G01N B01D |

-/--

The present search report has been drawn up for all claims

2

| Place of search | Date of completion of the search | Examiner |
|---|---|---|
| Munich | 24 January 2024 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 19 0990

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | OLIVER J ET AL: "Chromatographic determination of carotenoids in foods", JOURNAL OF CHROMATOGRAPHY A, ELSEVIER, AMSTERDAM, NL, vol. 881, no. 1-2, 1 June 2000 (2000-06-01), pages 543-555, XP004200171, ISSN: 0021-9673, DOI: 10.1016/S0021-9673(00)00329-0 * the whole document * ----- | 1-16 | |

TECHNICAL FIELDS SEARCHED (IPC)

The present search report has been drawn up for all claims

2

| Place of search | Date of completion of the search | Examiner |
| --- | --- | --- |
| Munich | 24 January 2024 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 0990

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2024

| Patent document cited in search report | | Publication date | Patent family member(s) | Publication date |
|---|---|---|---|---|
| CN 115219604 | B | 08-08-2023 | NONE | |
| EP 2919004 | A1 | 16-09-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **F. ROHNER et al.** Quantification of Vitamin A in Palm Oil Using a Fast and Simple Portable Device: Method Validation and Comparison to High-Performance Liquid Chromatography. *Int. J. Vitam. Nutr. Res.*, 2011, vol. 81 (5), 335-342
- **C. RENAUD et al.** Quantification of Vitamin A in Fortified Rapeseed, Groundnut and Soya Oils Using a Simple Portable Device: Comparison to High Performance Liquid Chromatography. *Int. J. Vitam. Nutr. Res.*, 2013, vol. 83 (2), 122-128
- **A. KUMAR et al.** A review of photometric methods for the quantitation of vitamin A. *Microchem. J.*, 2021, vol. 171, 106791
- **S. L. HUEY et al.** Portable Devices for Measurement of Vitamin A Concentrations in Edible Oil: Field Readiness of Available Options. *ACS Omega*, 2022, vol. 7, 17502-17518
- **C. CIMPOIU et al.** Thin Layer Chromatography for the Analysis of Vitamins and Their Derivatives. *Journal of Liquid Chromatography & related Technologies*, 2007, vol. 30 (5-7), 701-728
- **G. G. RIMKUS et al.** Rapid direct analysis of retinyl palmitate (vitamin A) in fortified vegetable oils by HPLC-FLD. *Foot Additives & Contaminants: Part A*, 2022, vol. 39 (1), 24-34
- **C. HAUK**. An open-source smartphone app for the quantitative evaluation of thin-layer chromatographic analyses in medicine quality screening. *Scientific Reports*, 2022, vol. 12, 13433